# EUROPEAN PATENT SPECIFICATION

(11) **EP 2 784 402 B1**
(45) Date of publication and mention of the grant of the patent: **25.01.2017**
(21) Application number: 14161351.3
(22) Date of filing: 24.03.2014
(51) Int. Cl.: F24D 17/02, F24D 19/10, G05D 23/00

(54) **Heat pump water heater**
Wärmepumpenwassererhitzer
Chauffe-eau à pompe de chaleur

(30) Priority: 27.03.2013 JP 2013065851
(43) Date of publication of application: 01.10.2014
(73) Proprietor: Panasonic Corporation, Kadoma-shi Osaka 571-8501 (JP)
(72) Inventor: Ohno, Youhei, OSAKA, 540-6207 (JP); Hamada, Masayuki, OSAKA, 540-6207 (JP); Yamamura, Naoto, OSAKA, 540-6207 (JP)
(74) Representative: Eisenführ Speiser

(56) References cited:
- WO-A1-2013/140954
- JP-A- 2005 016 947
- JP-A- 2005 147 611

## Description

### [TECHNICAL FIELD]

The present invention relates to a heat pump water heater.

### [BACKGROUND TECHNIQUE]

A conventional heat pump water heater of this kind includes a heat pump cycle including a hot water-supply heat exchanger, a liquid pipe through which liquid in a hot water tank circulates through the hot water-supply heat exchanger, a pump for circulating liquid in the hot water tank into the liquid pipe, entering-water temperature detecting means for detecting temperature of water which flows into the hot water-supply heat exchanger, outgoing-hot water temperature detecting means for detecting temperature of hot water which flows out from the hot water-supply heat exchanger, and a microcomputer. The microcomputer determines the number of rotations of the pump based on required ability, target outgoing-hot water temperature and entering-water temperature detected by the entering-water temperature detecting means and outputs the number of rotations of the pump (see patent document 1 for example).

Moreover, from patent document 2 forming the closest prior art document, a heat pump water heater is known which comprises: a refrigeration cycle having the compressor, a refrigerant/water heat exchanger and a pressure reducing device, a hot water storage tank, a hot water supply circuit having the refrigerant/water heat exchanger and a circulating pump, a supplied water temperature detection means detecting a supplied water temperature; a discharge temperature detection means detecting a discharge temperature of the compressor; and a control means controlling opening of the pressure reducing device so that the temperature detected by the discharge temperature detection means becomes a preset target discharge temperature. The number of rotations of the circulating pump to maintain an outlet temperature of the refrigerant/water heat exchanger at constant temperature, and as the supplied water temperature becomes higher, the target discharge temperature becomes lower.

Furthermore, patent document 3 discloses a heat-pump-type heating apparatus, wherein the heating capacity of a heating device is controlled with greater precision according to heating load. A control device for controlling the heating device determines the required heating capacity based on the exterior temperature, a set heating temperature, and the like; causes a compressor to operate based on the rotation speed for the set heating capacity and controls an expansion valve so that the discharge temperature of the compressor reaches a predetermined value; and performs a control so that the outgoing heat-medium-temperature measurement value of the heat medium delivered to the heating terminal is consistent with the outgoing heat-medium-temperature determined value for the heating capacity. Once it has been determined that the outgoing heat-medium-temperature measurement value is consistent with the outgoing heat-medium-temperature determined value, the control device compares the cooling-medium-outlet-temperature measurement value of the heating-medium heat exchanger measured by a temperature sensor with a cooling-medium-outlet-temperature stored value according to the determined heating capacity; and, if there is a disparity between the measured value and the stored value, changes the determined heating capacity to eliminate the disparity.

### [PRIOR ART DOCUMENT]

### [PATENT DOCUMENT]

[Patent Document 1] Japanese Patent Application Laid-open No.2005-147611
[Patent Document 2] Japanese Patent Application Laid-open No. 2005-016947
[Patent Document 3] PCT Patent Application Laid-open No. WO 2013/140954

### [SUMMARY OF THE INVENTION]

### [PROBLEM TO BE SOLVED BY THE INVENTION]

According to the conventional configuration, however, when a high flow rate is required, when entering water is high, or at the time of operation when a Boiling operation is completed, since the number of rotations of the pump is increased, there is a problem that durability of the pump is deteriorated and operation noise of the pump is increased.

The present invention has been accomplished to solve the conventional problem, and it is an object of the invention to provide a heat pump water heater capable of enhancing durability of a pump which conveys water to a hot water-supply heat exchanger and capable of reducing operation noise.

### [MEANS FOR SOLVING THE PROBLEM]

To solve the conventional problem, the present invention provides a heat pump water heater including: a heat pump cycle formed by connecting a compressor, a hot water-supply heat exchanger, a decompressor and an evaporator to one another through a refrigerant pipe; a hot water tank; a liquid pipe through which liquid in the hot water tank circulates through the hot water-supply heat exchanger; a pump for conveying the liquid in the hot water tank to the liquid pipe; outgoing-hot water temperature detecting means for detecting temperature of hot water which flows out from the hot water-supply heat exchanger; and a control device, which is configured to operate a heating operation for conveying the liquid in the hot water tank to the hot water-supply heat exchanger by the pump and heating the liquid by the hot water-supply heat exchanger, wherein the control device is configured to change a target value of temperature of the hot water which flows out from the hot water-supply heat exchanger into a higher value after continuing a state where number of rotations per time unit of the pump exceeds a preset predetermined value for predetermined time so that the number of rotations per time unit of the pump becomes lower.

According to this, by changing a target value of temperature of hot water which flows out from the hot water-supply heat exchanger into a higher value, the number of rotations of the pump can be reduced. Therefore, it is possible to provide a heat pump water heater capable of enhancing durability of a pump which conveys water to a hot water-supply heat exchanger and capable of reducing operation noise.

### [EFFECT OF THE INVENTION]

According to the present invention, it is possible to provide a heat pump water heater capable of enhancing durability of a pump which conveys water to a hot water-supply heat exchanger and capable of reducing operation noise.

### [BRIEF DESCRIPTION OF THE DRAWINGS]

Fig. 1 is a block diagram of a heat pump water heater in an embodiment of the present invention;
Fig. 2 is a block diagram showing control of the heat pump water heater;
Fig. 3 is a control flowchart of a heating operation of the heat pump water heater; and
Fig. 4 is a control flowchart of another heating operation of the heat pump water heater.

### [MODE FOR CARRYING OUT THE INVENTION]

A first aspect of the present invention provides a heat pump water heater including: a heat pump cycle formed by connecting a compressor, a hot water-supply heat exchanger, a decompressor and an evaporator to one another through a refrigerant pipe; a hot water tank; a liquid pipe through which liquid in the hot water tank circulates through the hot water-supply heat exchanger; a pump for conveying the liquid in the hot water tank to the liquid pipe; outgoing-hot water temperature detecting means for detecting temperature of hot water which flows out from the hot water-supply heat exchanger; and a control device, which is configured to operate a heating operation for conveying the liquid in the hot water tank to the hot water-supply heat exchanger by the pump and heating the liquid by the hot water-supply heat exchanger, wherein the control device is configured to change a target value of temperature of the hot water which flows out from the hot water-supply heat exchanger into a higher value after continuing a state where number of rotations per time unit of the pump exceeds a preset predetermined value for predetermined time so that the number of rotations per time unit of the pump becomes lower.

According to this aspect, by changing a target value of temperature of hot water which flows out from the hot water-supply heat exchanger into a higher value, the number of rotations of the pump can be reduced. Therefore, it is possible to provide a heat pump water heater capable of enhancing durability of a pump which conveys water to a hot water-supply heat exchanger and capable of reducing operation noise.

According to a second aspect of the invention, the heat pump water heater further includes entering-water temperature detecting means for detecting temperature of water which flows into the hot water-supply heat exchanger, and when the control device changes the target value of temperature of the hot water which flows out from the hot water-supply heat exchanger into the higher value, the control device changes temperature of the water for completing the heating operation which flows into the hot water-supply heat exchanger into a lower value.

According to this, even if the target value of temperature of hot water which flows out from the hot water-supply heat exchanger is changed into a higher value, since temperature of water for completing the heating operation which flows into the hot water-supply heat exchanger is changed into a lower value, a difference in a heating heat amount before and after the temperature is changed can be eliminated, and excessive heating is suppressed.

According to a third aspect of the invention, when then heating operation is completed, the changed target value of temperature of the hot water which flows out from the hot water-supply heat exchanger, and the changed temperature of the water for completing the heating operation which flows into the hot water-supply heat exchanger are returned by the control device into the value and the temperature before they are changed.

According to this, a heating operation for conveying liquid in the hot water tank to the hot water-supply heat exchanger and heating the liquid can always be carried out when a normal operation is started.

An embodiment of the present invention will be described with reference to the drawings. The invention is not limited to the embodiment.

A configuration and operating motions of a heat pump water heater in the embodiment of the invention will be described.

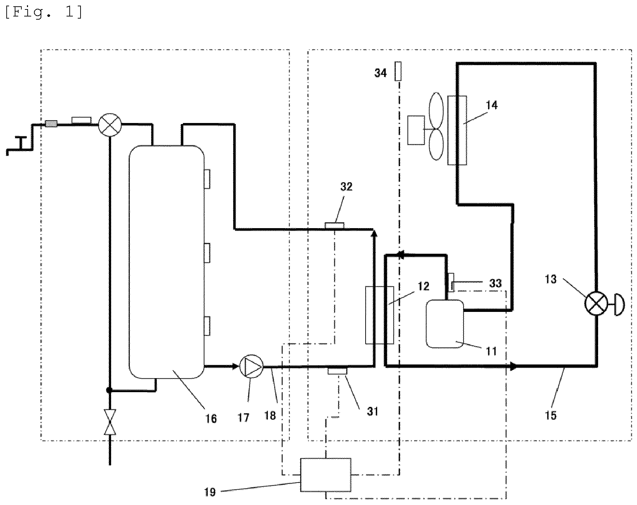

Fig. 1 is a block diagram of the heat pump water heater in the embodiment.

In Fig. 1, the heat pump water heater of the embodiment includes a heat pump cycle formed by annularly connecting an inverter type compressor 11, a hot water-supply heat exchanger 12, a decompressor 13 such as an expansion valve, and an evaporator 14 to one another through a refrigerant pipe 15; a hot water tank 16 in which liquid for hot water-supply is stored; and a liquid pipe 18 through which liquid in a lower portion of the hot water tank 16 circulates into an upper portion in the hot water tank 16 through the hot water-supply heat exchanger 12.

The heat pump water heater further includes a pump 17 for conveying liquid in the hot water tank 16 into the liquid pipe 18, entering-water temperature detecting means 31 for detecting temperature of water which flows into the hot water-supply heat exchanger 12, outgoing-hot water temperature detecting means 32 for detecting temperature of hot water which flows out from the hot water-supply heat exchanger 12, refrigerant temperature detecting means 33 for detecting temperature of refrigerant which is discharged from the inverter type compressor 11, outside air temperature detecting means 34 for detecting outside air temperature, and a control device 19.

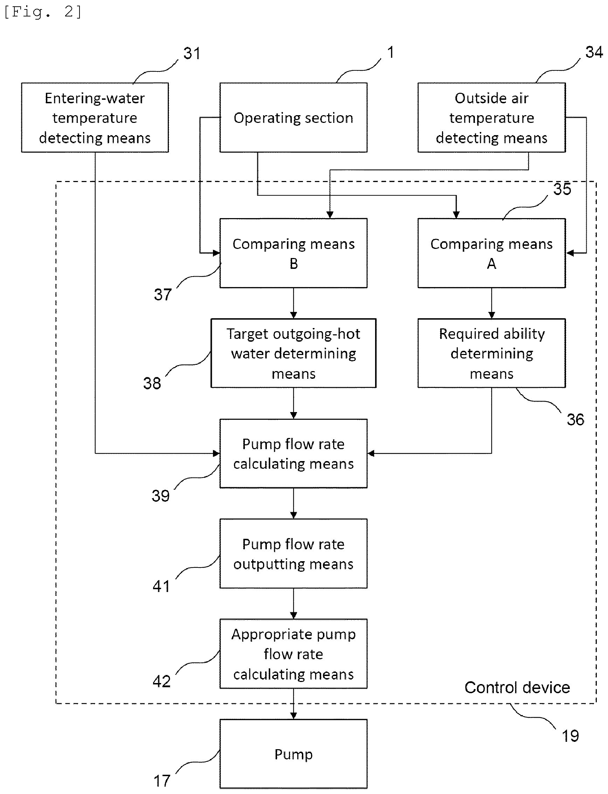

Fig. 2 is a block diagram showing control of the heat pump water heater in the embodiment of the invention.

As shown in Fig. 2, a target value of temperature of hot water which flows out from the hot water-supply heat exchanger 12 is determined by target outgoing-hot water determining means 38 by comparing information from an operating section 1 and information from the outside air temperature detecting means 34 with each other by comparing means B 37 .

Further, required ability is determined by required ability determining means 36 by comparing information from the operating section 1 and information from the outside air temperature detecting means 34 with each other by comparing means A 35.

Pump flow rate calculating means 39 calculates a conveying flow rate of the pump 17 based on the target value of the determined outgoing-hot water temperature, the required ability and a detection value of the entering-water temperature detecting means 31. Pump flow rate outputting means 41 outputs a value of the pump flow rate, appropriate pump flow rate calculating means 42 calculates the pump flow rate from this value, an appropriate pump flow rate is determined, and the pump 17 operates based on output (number of rotations) which corresponds to the flow rate.

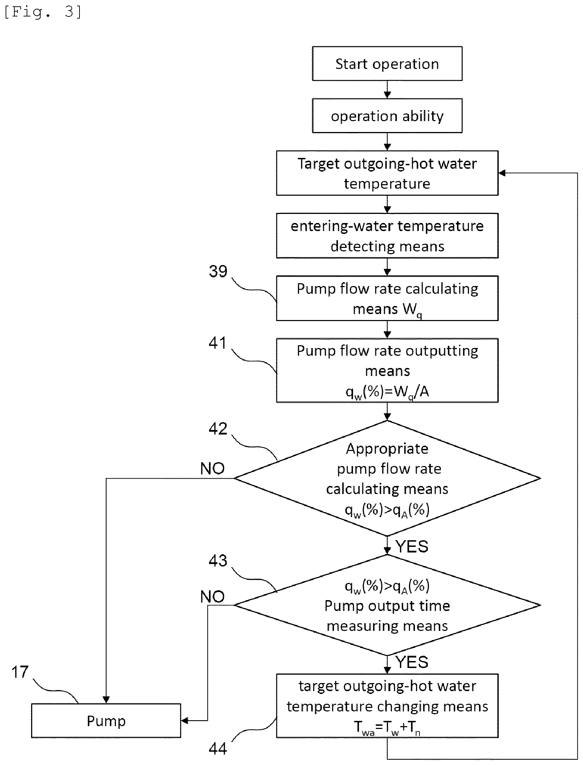

In the heat pump water heater of the embodiment, a heating operation is carried out. In the heating operation, liquid in the lower portion in the hot water tank 16 is conveyed to the hot water-supply heat exchanger 12 by the pump 17, the liquid is heated, and the liquid is stored in the upper portion in the hot water tank 16. Next, when a state where output (number of rotations) of the pump 17 exceeds a preset predetermined value continues for predetermined time, the control device 19 changes a target value of temperature of hot water which flows out from the hot water-supply heat exchanger 12 into a higher value. This specification will be described based on Fig. 3.

As shown in Fig. 2, an appropriate pump flow rate is determined by the appropriate pump flow rate calculating means 42, and the pump 17 operates based on the output (number of rotations) which corresponds to the flow rate. As shown in Fig. 3, when the appropriate pump flow rate calculating means 42 determines that a value which is output from the pump flow rate outputting means 41 is equal to or higher than a preset predetermined flow rate q_{A}, i.e., that output (number of rotations) of the pump 17 is equal to or higher than a preset predetermined value, rotation number detecting means (not shown) detects the output (number of rotations) of the pump 17. Pump output time measuring means 43 starts measuring time, and when required ability with respect to the heat pump cycle is equal to preset lowest ability and when a state where the output (number of rotations) of the pump 17 is equal to or higher than a predetermined value continues for preset predetermined time, target outgoing-hot water temperature changing means 44 changes target outgoing-hot water temperature T_{wa} into a value which is higher than a current value T_{w} by Tₙ.

By this change carried out by the target outgoing-hot water temperature changing means 44, the target outgoing-hot water temperature T_{wa} becomes higher. Therefore, with this change, to enhance the heat exchanging efficiency of water which passes through the hot water-supply heat exchanger 12, the pump flow rate calculating means 39 determines or changes the flow rate of the pump 17 into a value which is lower than that before the target outgoing-hot water temperature T_{wa} is changed. The appropriate pump flow rate calculating means 42 sets output (number of rotations) of the pump 17 into a value which corresponds to that flow rate and which is lower than that before the target outgoing-hot water temperature T_{wa} is changed.

When the appropriate pump flow rate calculating means 42 determines that a value which is output from the pump flow rate outputting means 41 is smaller than the preset predetermined flow rate q_{A}, i.e., that the output (number of rotations) of the pump 17 is smaller than a preset predetermined value, the appropriate pump flow rate calculating means 42 sets the output (number of rotations) of the pump 17 into the same value.

According to this, the number of rotations of the pump 17 can be reduced by changing the target value of temperature of hot water which flows out from the hot water-supply heat exchanger 12 into a higher value. Therefore, it is possible to provide a heat pump water heater capable of enhancing durability of the pump 17 which conveys water to the hot water-supply heat exchanger 12, and capable of reducing operation noise.

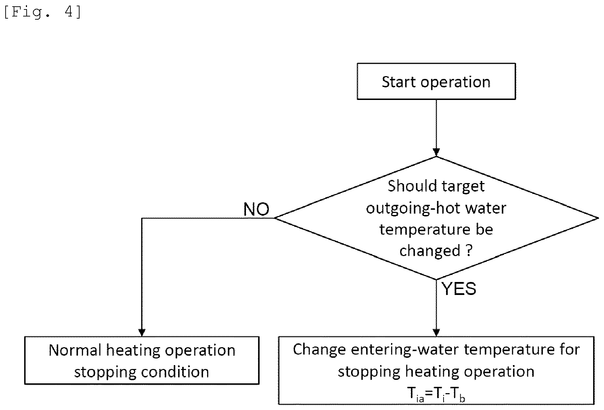

Next, in the heat pump water heater of the embodiment, when the target value of temperature of hot water which flows out from the hot water-supply heat exchanger 12 is changed into a higher value, temperature of water for completing the heating operation which flows into the hot water-supply heat exchanger 12 is changed into a lower value. This specification will be described based on Fig. 4.

When the target outgoing-hot water temperature changing means 44 changes target outgoing-hot water temperature T_{wa} into a value which is higher than current T_{w}°C by preset Tₙ°C, temperature Tᵢₐ of water for completing the heating operation which flows into the hot water-supply heat exchanger 12 is changed to a value which is lower than current Tᵢ by T_{b}.

According to this, in the temperature layer type hot water tank 16 of the heat pump water heater of the embodiment which carries the heating operation for conveying liquid in the lower portion in the hot water tank 16 to the hot water-supply heat exchanger 12 by the pump 17 and heating the liquid, and storing the liquid in the upper portion in the hot water tank 16, even if a target value of temperature of hot water which flows out from the hot water-supply heat exchanger 12 is changed into a higher value, by changing temperature Tᵢₐ of water for completing the heating operation which flows into the hot water-supply heat exchanger 12 into a lower value, i.e., by completing the heating operation in a state where temperature of water in the lower portion of the hot water tank 16 into a value which is lower than that before the temperature is changed, it is possible to eliminate a difference in a heating heat amount before and after the temperature is changed, and it is possible to suppress excessive heating.

When the heating operation is completed, the changed target value of temperature of hot water which flows out from the hot water-supply heat exchanger 12, and changed temperature of hot water for completing the heating operation which flows into the hot water-supply heat exchanger 12 are returned to the original values before they are changed. According to this, the heating operation for conveying liquid in the hot water tank 16 to the hot water-supply heat exchanger 12 by the pump 17 and for heating the liquid can always be carried out from the beginning of the normal operation.

### [INDUSTRIAL APPLICABILITY]

As described above, according to the heat pump water heater of the present invention, it is possible to enhance durability of the pump which conveys water to the hot water-supply heat exchanger and to reduce operation noise. Therefore, the heat pump water heater of the invention can be applied not only to a domestic heat pump water heater but also a professional-use heat pump water heater.

### [EXPLANATION OF SYMBOLS]

- 11: compressor
- 12: hot water-supply heat exchanger
- 13: decompressor
- 14: evaporator
- 15: refrigerant pipe
- 16: hot water tank
- 17: pump
- 18: liquid pipe
- 19: control device
- 31: entering-water temperature detecting means
- 32: outgoing-hot water temperature detecting means
- 39: pump flow rate calculating means
- 41: pump flow rate outputting means
- 42: appropriate pump flow rate calculating means
- 43: pump output time measuring means
- 44: target outgoing-hot water temperature changing means

## Claims

1. A heat pump water heater comprising:
a heat pump cycle formed by connecting a compressor (11), a hot water-supply heat exchanger (12), a decompressor (13) and an evaporator (14) to one another through a refrigerant pipe (15);
a hot water tank (16);
a liquid pipe (18) through which liquid in the hot water tank (16) circulates through the hot water-supply heat exchanger (12);
a pump (17) for conveying the liquid in the hot water tank (16) to the liquid pipe (18);
outgoing-hot water temperature detecting means (32) for detecting temperature of hot water which flows out from the hot water-supply heat exchanger (12); and
a control device (19), which is configured to operate a heating operation for conveying the liquid in the hot water tank (16) to the hot water-supply heat exchanger (12) by the pump (17) and heating the liquid by the hot water-supply heat exchanger (12),
**characterized in that** the control device (19) is configured to change a target value of temperature of the hot water which flows out from the hot water-supply heat exchanger (12) into a higher value if a state where number of rotations per time unit of the pump (17) exceeds a preset predetermined value continues for predetermined time so that the number of rotations per time unit of the pump becomes lower.

2. The heat pump water heater according to claim 1, further comprising entering-water temperature detecting means (31) for detecting temperature of water which flows into the hot water-supply heat exchanger (12), wherein
the control device (19) is configured to change temperature of the water for completing the heating operation which flows into the hot water-supply heat exchanger (12) into a lower value when the control device (19) changes the target value of temperature of the hot water which flows out from the hot water-supply heat exchanger into the higher value.

3. The heat pump water heater according to claim 1 or 2, wherein when then heating operation is completed, the control device (12) is configured to return the changed target value of temperature of the hot water which flows out from the hot water-supply heat exchanger (12), and the changed temperature of the water for completing the heating operation which flows into the hot water-supply heat exchanger (12) into the value and the temperature before they are changed.

## Patentansprüche

1. Wärmpumpenwassererhitzer, umfassend:
einen Wärmepumpenkreis, gebildet durch ein Verbinden eines Kompressors (11), eines Warmwasserversorgungs-Wärmetauschers (12), eines Entspanners (13) und eines Verdampfers (14) miteinander durch eine Kältemittelrohrleitung (15);
einen Warmwasserbehälter (16);
eine Flüssigkeitsrohrleitung (18) durch die Flüssigkeit in dem Warmwasserbehälter (16) durch den Warmwasserversorgungs-Wärmetauscher (12) strömt;
eine Pumpe (17) zum Fördern der Flüssigkeit in dem Warmwasserbehälter (16) zu der Flüssigkeitsrohrleitung (18);
eine Auslaufwarmwasser-Temperaturerfassungseinrichtung (32) zum Erfassen der Temperatur von Warmwasser, das aus dem Warmwasserversorgungs-Wärmetauscher (12) herausfließt; und
eine Steuerungsvorrichtung (19), die ausgelegt ist einen Erwärmungsvorgang zum Fördern der Flüssigkeit in dem Warmwasserbehälter (16) zum Warmwasserversorgungs-Wärmetauscher (12) durch die Pumpe (17) und zum Erwärmen der Flüssigkeit durch den Warmwasserversorgungs-Wärmetauscher (12) zu betreiben,
**dadurch gekennzeichnet, dass** die Steuerungsvorrichtung (19) ausgelegt ist, einen Temperatursollwert des Warmwassers, das aus dem Warmwasserversorgungs-Wärmetauscher (12) fließt, zu einem höheren Wert zu ändern, wenn ein Zustand, in dem die Drehzahl pro Zeiteinheit der Pumpe (17) einen voreingestellten vorgegebenen Wert überschreitet, über eine vorgegebene Zeit andauert, sodass die Drehzahl pro Zeiteinheit der Pumpe niedriger wird.

2. Wärmpumpenwassererhitzer nach Anspruch 1, weiter umfassend eine Einlaufwarmwasser-Temperaturerfassungseinrichtung (31) zum Erfassen der Temperatur von Wasser, das in den WarmwasserversorgungsWärmetauscher (12) fließt, wobei
die Steuerungsvorrichtung (19) ausgelegt ist, die Temperatur des Wassers zum Ausführen des Erwärmungsvorgangs, das in den Warmwasserversorgungs-Wärmetauscher (12) fließt, zu einem niedrigeren Wert zu ändern, wenn die Steuerungsvorrichtung (19) den Temperatursollwert des Warmwassers, das aus dem Warmwasserversorgungs-Wärmetauscher fließt, zu einem höheren Wert ändert.

3. Wärmpumpenwassererhitzer nach Anspruch 1 oder 2, wobei wenn der Erwärmungsvorgang ausgeführt ist, die Steuerungsvorrichtung (12) ausgelegt ist den geänderten Temperatursollwert des Warmwassers, das aus dem Warmwasserversorgungs-Wärmetauscher (12) fließt, und die geänderte Temperatur des Wassers zum Ausführen des Erwärmungsvorgangs, das in den Warmwasserversorgungs-Wärmetauscher (12) fließt, zu dem Wert und der Temperatur zurückzuändern bevor sie geändert wurden.

## Revendications

1. Chauffe-eau à pompe à chaleur, comprenant:
un cycle de pompe à chaleur formé par connexion l'un à l'autre d'un compresseur (11), d'un échangeur de chaleur (12) d'alimentation en eau chaude, d'un décompresseur (13) et d'un évaporateur (14) via un tube de réfrigérant (15);
un réservoir d'eau chaude (16);
un tube de liquide (18) via lequel le liquide dans le réservoir (16) d'eau chaude circule à travers l'échangeur de chaleur (12) d'alimentation en eau chaude;
une pompe (17) pour convoyer le liquide dans le réservoir (16) d'eau chaude vers le tube (18) de liquide;
un moyen (32) de détection de la température d'eau chaude sortante pour détecter la température de l'eau chaude qui circule depuis l'échangeur de chaleur (12) d'alimentation en eau chaude; et
un dispositif de commande (19), qui est configuré pour exécuter une opération de chauffage pour convoyer le liquide dans le réservoir (16) d'eau chaude vers l'échangeur de chaleur (12) d'alimentation en eau par la pompe (17) et chauffer le liquide par l'échangeur de chaleur (12) d'alimentation en eau,
**caractérisé en ce que** le dispositif de commande (19) est configuré pour modifier une valeur-cible de température de l'eau chaude qui circule depuis l'échangeur de chaleur (12) d'alimentation en eau en une valeur plus élevée si un état dans lequel le nombre de rotations par unité de temps de la pompe (17) dépasse une valeur prédéterminée préréglée se poursuit pendant un temps prédéterminée, de sorte que le nombre de rotations par unité de temps de la pompe deviennent plus faible.

2. Chauffe-eau à pompe à chaleur selon la revendication 1, comprenant en outre un moyen (31) de détection de la température de l'eau entrante pour détecter la température de l'eau qui circule dans l'échangeur de chaleur (12) d'alimentation en eau chaude, dans lequel
le dispositif de commande (19) est configuré pour modifier la température de l'eau pour l'exécution de l'opération de chauffage, qui circule dans échangeur de chaleur (12) d'alimentation en eau chaude, en une valeur plus basse lorsque le dispositif de commande (19) modifie en la valeur plus élevée la valeur-cible de température de l'eau chaude qui circule depuis l'échangeur de chaleur d'alimentation en eau chaude.

3. Chauffe-eau à pompe à chaleur selon la revendication 1 ou 2, dans lequel lorsque l'opération de chauffage est terminée, le dispositif de commande (12) est configuré pour ramener la valeur-cible de température modifiée de l'eau chaude qui circule depuis l'échangeur de chaleur (12) d'alimentation en eau chaude et la température modifiée de l'eau pour l'exécution de l'opération de chauffage, qui circule dans l'échangeur de chaleur (12) d'alimentation en eau chaude, en la valeur et la température antérieures à la modification.
